Europäisches Patentamt

European Patent Office

Office européen des brevets

(19)

(11) Publication number: **0 436 076 A2**

# EUROPEAN PATENT APPLICATION

(12)

(21) Application number: **90119364.9**

(22) Date of filing: **09.10.90**

(51) Int. Cl.5: **C08L 67/02**, //(C08L67/02, 51:04)

(30) Priority: **28.12.89 NL 8903169**

(43) Date of publication of application:
**10.07.91 Bulletin 91/28**

(84) Designated Contracting States:
**DE ES FR GB IT NL**

(71) Applicant: **GENERAL ELECTRIC COMPANY**
**1 River Road**
**Schenectady New York 10022(US)**

(72) Inventor: **Tabankia, Farshid**
**General Electric Plastics B.V., P.O. Box 117**
**NL-4600 AC Bergen op Zoom(NL)**

(74) Representative: **Schüler, Horst, Dr. et al**
**General Electric Praunheimer Landstrasse**
**50**
**W-6000 Frankfurt 90(DE)**

(54) **Polymer mixture which comprises a polyester and an agent to improve the impact strength.**

(57) The invention relates to a polymer mixture which comprises a polyester and an agent to improve the impact strength having a high rubber content.

EP 0 436 076 A2

## POLYMER MIXTURE WHICH COMPRISES A POLYESTER AND AN AGENT TO IMPROVE THE IMPACT STRENGTH.

The invention relates to a polymer mixture which comprises (A) a polyester built up from units derived from an alkanediol and an aromatic dicarboxylic acid, (B) an agent to improve the impact strength built up from a rubber-like backbone on which a vinylaromatic monomer and an alkylmethacrylate have been grafted, and (C) conventionally used additives. The invention also relates to articles formed from the polymer mixture according to the invention.

Polymer mixtures which comprise a polyester and an agent to improve the impact strength of the type mentioned hereinbefore are known per se. For this purpose reference may be made, for example, to EP-A-0,185,103. According to this prior art, for example, an agent used to improve the impact strength is an MMBS-grafted core-shell interpolymer which is commercially available as ACRYLOID ® KM 653. This known agent consists for approximately 80% by weight of a rubber-like backbone on which methylmethacrylate and styrene have been grafted in a weight ratio of approximately 1.5 : 1. It is known from other patent publications, for example, US-A-4,280,949, to add to polyesters a mixture of a polycarbonate resin and an agent to improve the impact strength such as the ACRYLOID ® KM 653 mentioned hereinbefore.

EP-A-0187313 describes polyester compositions comprising 52-99 parts by weight of at least one polyalkylene terephtalate and 1-48 parts by weight of a graft polymer. Said graft polymer has been obtained by grafting 10-30% by weight of monomer(s) on 70-90% by weight of a rubbery graft base. In the examples the graft polymer comprises 80% by weight of the rubbery graft base. The low temperature impact strength of the known composition at -40° C is less than 50% of the corresponding value at 23° C (example I).

FR-A-2320968 describes blends of an amorphous polyester and a graft polymer. The graft polymer may comprise 90-40 parts by weight of a diene upon which have been grafted 10-60 parts by weight of monomers. In the examples the maximum amount of diene rubber is 75 parts by weight.

It has now been found that by the addition of an agent having a given compostion to improve the impact strength, a polymer mixture having improved impact properties, in particular having an improved impact strength at low temperatures, can be obtained.

The polymer mixture according to the invention is characterised in that constituent (B), i.e. the agent to improve the impact strength, consists for 86-90%, exclusive 90% by weight of the rubber-like backbone.

In the polymer mixture according to the invention is preferably used a constituent (B) having a rubber-like backbone built up from polybutadiene or a poly(styrene-butadiene) having more than 80% by weight of butadiene units.

Preferably constituent (B) is composed so as the consist of 86-90%, exclusive 90%, by weight of the rubber-like backbone, 8-12% by weight of units derived from the alkylmethacrylate and 2-6% by weight of units derived from a vinylaromatic monomer, or even more preferably of 88% by weight of a polybutadiene backbone, 6-10% by weight of units derived from methylmethacrylate and 2-6% by weight of units derived from styrene.

The polymer mixture according to the invention preferably comprises 50-80% by weight of constituent (A), 20-50% by weight of constituent (B), all this calculated with respect to the sum of the parts by weight of (A) plus (B).

The polymer mixture according to the invention comprises at any rate the following constituents:

(A) a polyester, and

(B) an agent to improve the impact strength

The polymer mixture according to the invention may moreover comprise one or more conventionally used additives (C).

### A. Polyester

The invention relates to polymer mixtures which comprise a polyester having units derived from an alkanediol and an aromatic dicarboxylic acid. The polyester may comprise units derived from one or more alkanediol compounds. The polyester may also comprise units derived from one or more aromatic dicarboxylic acids. In addition to the alkanediol the polyester may comprise units derived from one or more other diol compounds or polyol compounds. The polyester generally comprises an excess of units derived from an alkanediol with respect to the optionally present units derived from other diol compounds or polyol compounds. Examples of suitable alkanediol compounds are ethanediol or butane-1,4-diol. In addition to units derived from aromatic dicarboxylic acids the polyester may also comprise units derived from other dicarboxylic acids or polycarboxylic acids. However, the greater part of the units derived from carboxylic acids is derived from an aromatic dicarboxylic acid. Suitable aromatic dicarboxylic acids are terephthalic acid and isophthalic acid. As a polyester is preferably used a polyester having more than 70 mol% of units derived from terephthalic acid and butane-1,4-diol.

It is also possible to use a mixture of one or more different polyesters, for example, a mixture of polyethylene terephthalate.

### B. Agent to improve the impact strength

The polymer mixture according to the invention comprises as an agent to improve the impact strength an agent which is built up from a rubber-like backbone on which a vinylaromatic monomer and an alkylmethacrylate have been grafted. The preparation of such agents is known per se; for this purpose reference may be made, for example, to US-A-3,985,704 and US-A-4,180,494. These agents are generally prepared starting from a rubber-like latex. The monomers are grafted on the rubber particles; sometimes in a single step, sometimes in several steps. It is also possible to graft small quantities of cross-linking agents and graft-linking agents together with the monomers on the rubber-like latex particles. In order to obtain a suitable agent for use in the polymer mixture according to the invention it is necessary to ensure that the content of the rubber-like backbone in the agent is between 86-90%, exclusive 90%, by weight. With a content of less than 86% by weight the agent is less effective to improve the impact strength at low temperatures. In practice it is difficult to prepare agents having a rubber content of 90% or more by weight.

The rubber-like backbone preferably consists of polybutadiene or a poly(styrene-butadiene) having more than 80% by weight of butadiene. Preferably 8-12% by weight of alkyl methacrylate units and 2-6% by weight of units of a vinylaromatic monomer are grafted on the rubber-like backbone. Styrene may be used as a vinylaromatic monomer. A suitable alkylmethacrylate is methylmethacrylate or ethylmethacrylate.

### Conventionally used additives

The polymer mixture according to the invention may comprise one or more conventionally used additives, for example, stabilisers, pigments, dyes and mould-release agents.

### Mode of preparation

The polymer mixture according to the invention can be obtained according to the conventional methods of preparing polymer mixtures, for example, by melt extrusion.

### Examples A and B; I

Three polymer mixtures were prepared: prior art polymer mixtures A and B and polymer composition I according to the invention. The polymer mixtures were prepared by mixing the following constituents in a double-blade extruder:

PBT: a polyester built up from units derived from butanediol and terephthalic acid having an intrinsic viscosity of approximately 1.2 dl/g at 25° C measured in a phenol/tetrachloroethane mixture

MBS-1: a product commercially available as ACRYLOID ® KM 653 having a polybutadiene backbone on which styrene and methylmethacrylate have been grafted. The rubber content is approximately 80% by weight, the weight ratio methylmethacrylate/styrene is 1.5 : 1.

MBS-2: a product similar to MBS-1 but having a polybutadiene content of 88% by weight and a weight ratio of the methylmethacrylate to styrene of more than 1.5 : 1.

Stab: a mixture of conventionally used stabilisers.

The above constituents were mixed in the quantities as indicated in Table A hereinafter. Test rods were manufactured from the resulting polymer mixtures by injection moulding to determine the Izod notched impact strength. The results obtained, measured at different temperatures, are also recorded in Table A hereinafter. The computed rubber content of each polymer mixture is also recorded in the Table.

## TABLE A

| Polymer mixture | A | B | C |
|---|---|---|---|
| Composition (parts by weight) | | | |
| . PBT | 71.2 | 74.7 | 74.7 |
| . MBS-1 | 28.6 | 25 | -- |
| . MBS-2 | -- | -- | 25 |
| . Stab | .25 | .25 | .25 |
| Rubber content of the mixture (wt.%) | 22.9 | 20 | 22.0 |
| Properties | | | |
| Izod notched impact (J/m) | | | |
| -25° C | 515 | | 1000 |
| -30° C | 222 | | 990 |
| -40° C | | | 932 |
| -45° C | | | 520 |
| -50° C | | | 206 |
| Transition temperature | -25 | -28 | -45 |
| ductile/brittle fracture ° C | | - | |
| Flow | | 12 | 15.6 |
| Melt flow index at 250° C and 50 N | | | |

It will be obvious from the results as indicated above that the polymer mixture according to the invention has a better impact strength at low temperatures. This cannot be explained on the basis of a possibly higher rubber content in the polymer mixture when the same quantity of the agent to improve the impact strength is used. Polymer mixture I according to the invention having a comparable rubber content as polymer mixture A has a much more favourable transition temperature for the ductile to brittle fracture. Comparative polymer mixtures A and B having the same agent to improve the impact strength in two different quantities and hence with a different rubber content in the polymer mixture, have substantially the same transition temperature.

All patent (applications) mentioned herein are herewith incorporated by reference.

**Claims**

1. A polymer mixture which comprises (A) a polyester built up from units derived from an alkanediol and an aromatic dicarboxylic acid, (B) an agent to improve the impact strength built up from a rubber-like backbone on which a vinylaromatic monomer and an alkylmethacrylate have been grafted, and (C) conventionally used additives, characterised in that constituent (B) consists for 86-90%, exclusive 90%, by weight of the rubber-like backbone.

2. A polymer mixture as claimed in Claim 1, characterised in that the rubber-like backbone in constituent (B) is built up from polybutadiene or a poly(styrene-butadiene) having more than 80% by weight of butadiene units.

3. A polymer mixture as claimed in Claim 1, characterised in that constituent (B) consists of 86-90%, exclusive 90% by weight of the rubber-like backbone, 8-12% by weight of units derived from alkylmethacrylate and 2-6% by weight of units derived from a vinylaromatic monomer.

4. A polymer mixture as claimed in claim 1, characterised in that constituent (B) comprises 88% by weight of a polybutadiene backbone, 6-10% by weight of units derived from methylmethacrylate and 2-6% by weight of units derived from styrene.

5. A polymer mixture as claimed in Claim 1, characterised in that the polymer mixture comprises 50-80% by weight of constituent (A) and 20-50% by weight of constituent (B) calculated with respect to the sum of the parts by weight of (A) plus (B).

6. Articles formed from the polymer mixture as claimed in Claim 1.